# EUROPÄISCHE PATENTANMELDUNG

(11) **EP 3 162 843 A1**
(43) Veröffentlichungstag der Anmeldung: **03.05.2017**
(21) Anmeldenummer: 16002299.2
(22) Anmeldetag: 27.10.2016
(51) Int. Cl.: C08J 7/04, B44C 1/10, B44C 5/04, B32B 27/06

(54) **FARBIGES OBERFLÄCHENMATERIAL UND HIERMIT VERSEHENER GEGENSTAND**

(30) Priorität: 30.10.2015 DE 102015014042; 11.12.2015 DE 102015016037
(71) Anmelder: Aluminium Féron GmbH & Co. KG, 52355 Düren (DE)
(72) Erfinder: Féron, Berthold, 52372 Kreuzau (DE); Höls, Lothar, 52355 Düren (DE); Grandenberg, Marc, 52385 Nideggen (DE)
(74) Vertreter: Hauck Patentanwaltspartnerschaft mbB

(57) **Zusammenfassung**

Es wird ein farbiges Oberflächenmaterial zur Anbringung auf Substraten, insbesondere den Oberflächen von Möbelstücken, Bauelementen u.dgl., beschrieben. Das'Oberflächenmaterial umfasst eine Kunststofffolie, die zumindest partiell durchsichtig oder durchscheinend ist, und das Material weist auf der dem Substrat zugewandten Seite eine Schicht aus einem farbigen Lack auf. Durch diese Konterfärbung entsteht der Eindruck eines durchgehend gefärbten Oberflächenmateriales. Ferner wird ein Gegenstand beschrieben, der ein Substrat aufweist, das mit einem derartigen Oberflächenmaterial versehen ist.

## Beschreibung

Die vorliegende Erfindung betrifft ein farbiges Oberflächenmaterial zur Anbringung auf Substraten, insbesondere den Oberflächen von Möbelstücken, Bauelementen u.dgl., umfassend eine Kunststofffolie.

Ein derartiges farbiges Oberflächenmaterial ist bekannt. Es wird auf entsprechende Substrate, wie beispielsweise die Oberflächen von Möbelstücken, aufgebracht, um dem Möbelstück ein dekoratives farbiges Aussehen zu verleihen. Auch kann es sich bei den Substraten beispielsweise um Oberflächen von Bauelementen für den Innenausbau handeln. Die Substrate können beispielsweise aus Holz, Kunststoff, Metall oder geeigneten Verbundwerkstoffen bestehen. Auch können beispielsweise geeignete Kunststoffschäume, Faserverbundwerkstoffe u.dgl. Materialien solche Substrate bilden.

Um derartigen Oberflächenmaterialien ein farbiges Aussehen zu verleihen, ist es bekannt, die Materialien durchzufärben. Für die Herstellung der entsprechenden Kunststofffolie kommen dabei farbige Granulate zum Einsatz, so dass für das fertige Oberflächenmaterial eine durchgefärbte Kunststofffolie verwendet wird. Geeignete Kunststoffe für derartige Anwendungszwecke sind beispielsweise Polyvinylchlorid oder Polypropylen.

Wenn im folgenden Text von einem "farbigen" Oberflächenmaterial die Rede ist, so schließt dies sämtliche möglichen Farben, auch Schwarz und Weiß, ein.

Es ist somit bekannt, für ein derartiges farbiges Oberflächenmaterial eine Kunststofffolie aus einem entsprechenden farbigen Granulat herzustellen, so dass sich dann ein durchgefärbtes Oberflächenmaterial ergibt. Die durchgefärbte Kunststofffolie wird über übliche Kleber, beispielsweise Hot-Melt-Kleber, Dispersionskleber, auf das zugehörige Substrat aufgebracht und mit diesem verbunden. Die Vorgehensweise hat jedoch herstellungstechnisch gewisse Nachteile, da die Herstellung der zugehörigen Kunststofffolien mittels farbiger Granulate aufwendig und teuer ist. Insbesondere lassen sich hiermit kleinere Materialmengen nicht oder nur in beschränkter Weise wirtschaftlich herstellen.

Der vorliegenden Erfindung liegt die Aufgabe zugrunde, ein farbiges Oberflächenmaterial der eingangs beschriebenen Art zu schaffen, das besonders einfach herstellbar und variabel einsetzbar ist.

Diese Aufgabe wird erfindungsgemäß bei einem farbigen Oberflächenmaterial der angegebenen Art dadurch gelöst, dass die Kunststofffolie als zumindest partiell durchsichtige oder durchscheinende Kunststofffolie ausgebildet ist und dass das Material auf der dem Substrat zugewandten Seite eine Schicht aus einem farbigen Lack aufweist.

Bei dem erfindungsgemäß ausgebildeten Oberflächenmaterial findet daher nicht wie beim Stand der Technik eine durchgefärbte Kunststofffolie Verwendung, sondern das Material wird mit einer Schicht aus einem farbigen Lack versehen, während die eigentliche Kunststofffolie zumindest partiell durchsichtig oder durchscheinend ausgebildet ist, so dass der Betrachter den Eindruck gewinnt, eine farbige Kunststofffolie vor sich zu haben, während in Wirklichkeit eine zumindest partiell durchsichtige oder durchscheinende Kunststofffolie vorhanden ist und der entsprechende Farbeffekt durch die dahinter angeordnete Lackschicht bewirkt wird. Erfindungsgemäß findet somit eine sogenannte Konterfärbung Verwendung.

Die erfindungsgemäß verwendete Kunststofffolie kann eine beliebige Kunststofffolie sein, die zumindest partiell durchsichtig oder durchscheinend ausgebildet ist. Als Materialien hierfür kommen beispielsweise Polyvinylchlorid, Polypropylen, Acrylate, amorpher und kristalliner Polyester etc. in Frage. Die Kunststofffolie kann dabei beispielsweise eine Dicke von 0,1 bis 1 mm aufweisen.

Als farbiger Lack können übliche Lacke Verwendung finden, beispielsweise Zweikomponentenlacksysteme, Einkomponentenlacksysteme. Die Erfindung ist nicht auf die Verwendung von speziellen Kunststofffolien und/oder speziellen farbigen Lacksystemen beschränkt.

Mit "partiell durchsichtig oder durchscheinend" sind hier alle möglichen Varianten zwischen transparent und opak gemeint. Dies schließt auch örtlich begrenzte Bereiche ein, die sich von anderen örtlich begrenzten Bereichen unterscheiden.

Auch die farbige Lackschicht kann in einer Vielzahl von Varianten ausgebildet sein. So kann beispielsweise eine glänzende oder mattierte Schicht vorgesehen sein. Auch kann die Lackschicht nur partiell farbig ausgebildet sein, beispielsweise entsprechende Muster, Streifen etc. bilden.

Bei einer bevorzugten Ausführungsform des erfindungsgemäßen farbigen Oberflächenmateriales ist die Lackschicht als Konterlack direkt auf der Kunststofffolie aufgebracht. Bei einer anderen Ausführungsform ist zwischen der Kunststofffolie und der Lackschicht mindestens eine weitere zumindest partiell durchsichtige oder durchscheinende Schicht angeordnet. Hierbei kann es sich beispielsweise um einen Klarlack handeln. Die weitere Schicht kann auch mattiert bzw. partiell mattiert sein.

Generell ist zu sagen, dass die Schicht aus dem farbigen Lack aus einer einzigen Schicht oder aus mehreren Schichten bestehen kann.

Wenn zwischen Kunststofffolie und Lackschicht eine Zwischenschicht angeordnet ist, kann diese auch vorgesehen sein, um in Verbindung mit der Lackschicht einen speziellen Farbeffekt zu erzeugen, beispielsweise Mischfarben zu generieren.

Die erfindungsgemäß vorgesehene farbige Lackschicht ist vorzugsweise als äußerste Schicht zur Anbringung am Substrat ausgebildet. Bei dieser Ausführungsform ist daher die Lackschicht selbst als Haftungsschicht ausgebildet, die die Haftverbindung mit dem Substrat herstellt, oder dient als Träger für ein entsprechendes Haftmittel, beispielsweise einen geeigneten Kaschierkleber, mittels dem dann die Verbindung zwischen dem Oberflächenmaterial und dem Substrat hergestellt wird. Dieses Hilfsmittel kann ebenfalls farbig sein.

Es kann aber auch auf der Lackschicht zur Substratseite hin mindestens eine weitere Schicht angeordnet sein, so dass dann diese mindestens eine weitere Schicht eine Haftungsschicht bildet oder als Träger für ein Haftmittel dient. Auch kann über eine derartige weitere Schicht eine gewünschte Aufdickung des Oberflächenmateriales erzielt werden. Haftungsschicht oder Haftmittel können ebenfalls farbig sein.

Bei noch einer erfindungsgemäßen Ausführungsform ist die Lackschicht oder die mindestens eine weitere Schicht so ausgebildet, dass das Oberflächenmaterial durch Einwirkung von erhöhtem Druck und erhöhter Temperatur, insbesondere durch ein HPL-Verfahren, auf das Substrat aufbringbar ist. Bei dieser Ausführungsform wird das Oberflächenmaterial zusammen mit dem Substrat bei erhöhtem Druck und erhöhter Temperatur verpresst, wobei Druck und Temperatur vom jeweiligen Verarbeitungsprozess abhängig sind. Beispielsweise kommen hierbei Drücke von 80-100 bar und Temperaturen von 150-180 °C zur Anwendung (HPL = High Pressure Laminate).

Auch kann das CPL-Verfahren (Continuous Pressure Laminate) Anwendung finden, das vorzugsweise bei Drücken von 25-50 bar und Temperaturen von 170-190 °C durchgeführt wird, ebenfalls das KT-Verfahren.

Vorzugsweise können daher drei Verfahren Verwendung finden, um das Oberflächenmaterial auf das Substrat aufzubringen. Bei einem ersten Verfahren ist die Lackschicht selbst als Haftungsschicht ausgebildet. Bei einem 2. Verfahren trägt die Lackschicht eine Haftungsschicht, und bei einem 3. Verfahren wird das Oberflächenmaterial durch Verpressen aufgebracht.

Vorzugsweise weist die Kunststofffolie auf ihrer vom Substrat abgewandten Seite mindestens eine weitere Schicht auf, bei der es sich beispielsweise um eine solche handeln kann, die dem Material Kratzfestigkeit bzw. Scheuerfestigkeit verleiht. Auch kann die weitere Schicht eine weitere Farbschicht sein, die zusammen mit dem farbigen Lack Farbeffekte erzeugt, beispielsweise entsprechende Changiereffekte.

Die mindestens eine weitere Schicht kann als radikalisch härtende Schicht (Strahlenhärtung) ausgebildet sein.

Diese zusätzlichen Schichten können beispielsweise über geeignete Kaschierkleber auf die Kunststofffolie aufgebracht werden. Es versteht sich, dass diese Schichten zumindest partiell durchsichtig oder durchscheinend sein müssen, um die gewünschten Farbeffekte nicht zu beeinträchtigen.

Bei dem erfindungsgemäß ausgebildeten Oberflächenmaterial kann die vom Substrat abgewandte Außenseite, die entweder durch die Kunststofffolie selbst oder durch mindestens eine weitere Schicht gebildet wird, verschiedene Strukturen aufweisen, beispielsweise matt, semimatt, glänzend etc.

Wie bereits erwähnt, kann die Schicht aus dem farbigen Lack, die als Farbdekorschicht dient, sich aus mehreren Lagen und Farben zusammensetzen.

Es versteht sich, dass das erfindungsgemäß ausgebildete Oberflächenmaterial nicht nur einfarbig ausgebildet sein muss, sondern auch verschiedene Farbmuster aufweisen kann, die durch die Konterfärbung und ggf. durch zusätzliche Farbschichten erzeugt werden können, auch durch Konterbedruckung.

Die vorliegende Erfindung bezieht sich ferner auf einen Gegenstand, insbesondere Möbelstück, Bauelement u.dgl., mit einem Substrat und einem damit verbundenen farbigen Oberflächenmaterial umfassend eine Kunststofffolie.

Dieser Gegenstand ist erfindungsgemäß dadurch gekennzeichnet, dass die Kunststofffolie als zumindest partiell durchsichtige oder durchscheinende Kunststofffolie ausgebildet ist und dass das Oberflächenmaterial auf der dem Substrat zugewandten Seite eine Schicht aus einem farbigen Lack aufweist.

Die Verbindung des Oberflächenmateriales mit dem Substrat erfolgt hierbei vorzugsweise über einen Kaschierkleber, wobei übliche Kaschierkleber Verwendung finden können, die vorstehend beispielhaft genannt wurden. Bei einer anderen Ausführungsform kann das Oberflächenmaterial über eine als Haftungsschicht ausgebildete Schicht, insbesondere die farbige Lackschicht, mit dem Substrat verbunden sein. Bei dieser Ausführungsform übernimmt daher eine Schicht des Oberflächenmateriales, speziell die farbige Lackschicht, selbst die Haftungsfunktion, und es findet kein zusätzliches Haftmittel Verwendung. Eine solche Haftung kann beispielsweise durch Verpressen des Oberflächenmateriales mit dem Substrat bei erhöhtem Druck und erhöhter Temperatur erreicht werden, die zu einem Aushärten der noch reaktiven Haftungsschicht führt. Als Beispiel sei hier das bereits vorstehend genannte HPL-, CPL- oder KT-Verfahren erwähnt.

Bei dem hier beanspruchten Gegenstand umfasst das Oberflächenmaterial zwingend eine zumindest partiell durchsichtige oder durchscheinende Kunststofffolie sowie auf der Seite zum Substrat hin eine farbige Lackschicht, die den entsprechenden Farbeffekt erzeugt. Zusätzlich dazu kann das Oberflächenmaterial weitere Schichten von der Lackschicht zur Substratseite hin, zusätzliche Zwischenschichten zwischen der Lackschicht und der Kunststofffolie und zusätzliche Schichten von der Kunststofffolie zur Oberseite des Gegenstandes hin aufweisen. Bei diesen zusätzlichen Schichten kann es sich beispielsweise um Primerschichten, Haftschichten, Schichten zur Erhöhung der Kratzfestigkeit oder Scheuerfestigkeit, Verdickungsschichten etc. handeln.

Die Erfindung wird nachfolgend anhand von Ausführungsbeispielen in Verbindung mit der Zeichnung im Einzelnen erläutert. Es zeigen:
- Figur 1: eine erste Ausführungsform eines farbigen Oberflächenmateriales im Vertikalschnitt nicht maßstabsgetreu;
- Figur 2: eine zweite Ausführungsform des farbigen Oberflächenmateriales im Vertikalschnitt nicht maßstabsgetreu; und
- Figur 3: einen Teil eines mit einem farbigen Oberflächenmaterial einer dritten Ausführungsform versehenen Gegenstandes im Vertikalschnitt nicht maßstabsgetreu.

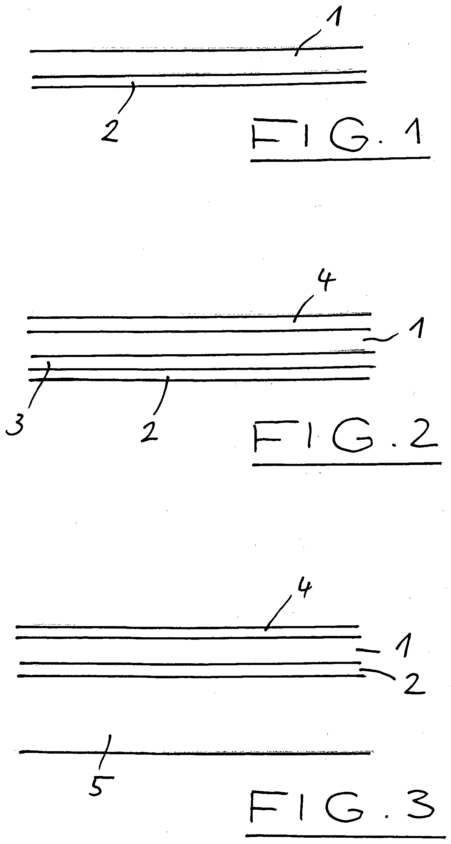

Das in Figur 1 dargestellte Oberflächenmaterial besitzt eine Kunststofffolie 1, bei der es sich beispielsweise um eine PVC-Folie handeln kann, deren eine Seite (die zum Substrat hin weisende Seite) mit einem farbigen Konterlack versehen ist, der in einer Schicht oder in mehreren Schichten auf die Kunststofffolie 1 aufgestrichen ist.

Bei der in Figur 2 dargestellten Ausführungsform weist das Oberflächenmaterial ebenfalls eine Kunststofffolie 1, beispielsweise PVC-Folie, auf, auf die zur Substratseite hin ein Klarlack 3 als Zwischenschicht aufgetragen ist. Diese Zwischenschicht ist mit einem farbigen Lack 2 als Konterfärbung versehen. Auf der gegenüberliegenden Seite der Kunststofffolie 1 befindet sich eine weitere Kunststoffschicht 4 zur Erhöhung der Kratzfestigkeit bzw. Scheuerfestigkeit.

Bei beiden Oberflächenmaterialien der Figuren 1 und 2 findet eine durchsichtige PVC-Folie Verwendung, so dass durch die als Konterfärbung vorgesehene farbige Lackschicht 2 der Eindruck eines durchgehend gefärbten Oberflächenmateriales hervorgerufen wird.

Figur 3 zeigt einen Teil eines Gegenstandes, beispielsweise eines Möbelstückes, bei dem ein Substrat 5 mit einem Oberflächenmaterial versehen ist. Bei dieser Ausführungsform umfasst das Oberflächenmaterial ebenfalls eine durchsichtige PVC-Folie als Kunststofffolie 1, die auf ihrer Oberseite mit einer Lackschicht 4 versehen ist, welche die Kratzfestigkeit des Materiales erhöht. Zur Substratseite hin besitzt das Oberflächenmaterial eine farbige Lackschicht 2, mit der die entsprechende Seite der Kunststofffolie 1 bestrichen ist. Das Oberflächenmaterial und das Substrat werden bei erhöhter Temperatur und erhöhtem Druck miteinander verpresst, beispielsweise durch das vorstehend beschriebene HPL-Verfahren, so dass sich als Endprodukt ein mit einem entsprechenden farbigen Oberflächenmaterial versehenes Substrat ergibt.

### Ausführungsbeispiele

Eine zumindest partiell durchsichtige Folie auf Basis von Polyethylenterephtalat in einer Stärke von 100 µm, die einseitig mit einer handelsüblichen, radikalisch härtenden Lackierung versehen war, wurde auf der Rückseite mit einem eingefärbten Lack auf Basis von Polyol-Isocyanat versehen. Je nach Intensität der Einfärbung wurde hierbei ein Auftragsgewicht der Lackierung im Bereich von 10-100 g/m² gewählt, um eine hohe Opazität zu erzielen. Nach Trocknung und einer Aushärtezeit von ca. 7 Tagen wurde dieses Material mittels eines Polyurethan-Hot-Melt-Klebers oder eines handelsüblichen Klebers auf Dispersionsbasis gegen eine Platte als Substrat verklebt. Es entstand eine für Möbeloberflächen einsetzbare Platte, die aufgrund der farbigen Konterfärbung dem Produkt eine gewisse Tiefe verlieh.

Bei einem weiteren Ausführungsbeispiel wurde das auf der Rückseite mit dem eingefärbten Lack versehene Folienmaterial direkt einem Verfahren unterzogen, das unter Druck und Temperatur zur Herstellung von Möbeloberflächen eingesetzt wird. Das erstellte Folienmaterial wurde bei einer Temperatur von 140 °C und einem Druck von 60 bar nach dem HPL-Verfahren mit phenolharzgetränkten und/oder melaminharzgetränkten Papieren verpresst. Die Konterlackschicht war dabei so aufgebaut, dass eine sehr gute Haftung zwischen dem Konterlack und der Unterlage erzielt wurde.

In noch einem weiteren Ausführungsbeispiel wurde der rückseitig aufgebrachte Konterlack des Folienmateriales mit einem weiteren Lack versehen, der haftungsmäßig so eingestellt wurde, dass eine gute Haftung auf dem farbigen Konterlack erzielt wurde und zur Außenseite ein Eigenschaftsbild erhalten wurde, welches eine direkte Hinterspritzung mit Polystyrol, Polypropylen oder anderen Thermoplasten erlaubte und gute Haftungseigenschaften zwischen der Folie und den hinterspritzten Thermoplasten wie auch in Verbindung mit Vergussmassen aufwies.

## Patentansprüche

1. Farbiges Oberflächenmaterial zur Anbringung auf Substraten, insbesondere den Oberflächen von Möbelstücken, Bauelementen u.dgl., umfassend eine Kunststofffolie, **dadurch gekennzeichnet, dass** die Kunststofffolie als zumindest partiell durchsichtige oder durchscheinende Kunststofffolie (1) ausgebildet ist und dass das Material auf der dem Substrat (5) zugewandten Seite eine Schicht (2) aus einem farbigen Lack aufweist.

2. Oberflächenmaterial nach Anspruch 1, **dadurch gekennzeichnet, dass** die Lackschicht (2) als Konterlack direkt auf der Kunststofffolie (1) aufgebracht ist.

3. Oberflächenmaterial nach Anspruch 1, **dadurch gekennzeichnet, dass** zwischen der Kunststofffolie (1) und der Lackschicht (2) mindestens eine weitere zumindest partiell durchsichtige oder durchscheinende Schicht (3) angeordnet ist.

4. Oberflächenmaterial nach einem der vorangehenden Ansprüche, **dadurch gekennzeichnet, dass** die Lackschicht (2) als äußerste Schicht zur Anbringung am Substrat (5) ausgebildet ist.

5. Oberflächenmaterial nach einem der Ansprüche 1 bis 3, **dadurch gekennzeichnet, dass** auf der Lackschicht (2) zur Substratseite hin mindestens eine weitere Schicht angeordnet ist.

6. Oberflächenmaterial nach Anspruch 4 oder 5, **dadurch gekennzeichnet, dass** die Lackschicht (2) oder die mindestens eine weitere Schicht als Haftungsschicht ausgebildet ist.

7. Oberflächenmaterial nach Anspruch 6, **dadurch gekennzeichnet, dass** die Lackschicht (2) oder die mindestens eine weitere Schicht so ausgebildet ist, dass das Oberflächenmaterial durch Einwirkung von erhöhtem Druck und erhöhter Temperatur, insbesondere durch ein HPL-, CPL- oder KT-Verfahren, auf das Substrat (5) aufbringbar ist.

8. Oberflächenmaterial nach einem der vorangehenden Ansprüche, **dadurch gekennzeichnet, dass** die Kunststofffolie (1) auf ihrer vom Substrat (5) abgewandet Seite mindestens eine weitere Schicht (4) aufweist.

9. Oberflächenmaterial nach Anspruch 8, **dadurch gekennzeichnet, dass** die mindestens eine weitere Schicht (4) eine solche ist, die dem Material Kratzfestigkeit bzw. Scheuerfestigkeit verleiht.

10. Oberflächenmaterial nach Anspruch 8 oder 9, **dadurch gekennzeichnet, dass** die weitere Schicht (4) eine weitere Farbschicht ist, die zusammen mit dem farbigen Lack Farbeffekte erzeugt.

11. Gegenstand, insbesondere Möbelstück, Bauelement u.dgl., mit einem Substrat und einem damit verbundenen farbigen Oberflächenmaterial umfassend eine Kunststofffolie, **dadurch gekennzeichnet, dass** die Kunststofffolie als zumindest partiell durchsichtige oder durchscheinende Kunststofffolie (1) ausgebildet ist und dass das Oberflächenmaterial auf der dem Substrat (5) zugewandten Seite eine Schicht (2) aus einem farbigen Lack aufweist.

12. Gegenstand nach Anspruch 11, **dadurch gekennzeichnet, dass** das Oberflächenmaterial über einen Kaschierkleber mit dem Substrat (5) verbunden ist.

13. Gegenstand nach Anspruch 11, **dadurch gekennzeichnet, dass** das Oberflächenmaterial über eine als Haftungsschicht ausgebildete Schicht, insbesondere die farbige Lackschicht (2), mit dem Substrat (5) verbunden ist.

14. Gegenstand nach Anspruch 13, **dadurch gekennzeichnet, dass** das Oberflächenmaterial durch Einwirkung von erhöhtem Druck und erhöhter Temperatur, insbesondere durch ein HPL-, CPL- oder KT-Verfahren, mit dem Substrat (5) verbunden ist.
